# EUROPEAN PATENT APPLICATION

(11) **EP 1 901 528 A1**
(43) Date of publication of application: **19.03.2008**
(21) Application number: 07116126.9
(22) Date of filing: 11.09.2007
(51) Int. Cl.: H04L 29/08, H04L 12/18, H04L 12/28, H04L 12/58

(54) **Method for establishing a data exchange session between devices in a mobile ad hoc network, and corresponding mobile device and computer-readable medium**

(30) Priority: 12.09.2006 US 531087; 12.07.2007 KR 20070070089
(71) Applicant: Samsung Electronics Co., Ltd., Suwon-si, Gyeonggi-Do (KR)
(72) Inventor: Sakhpara, Ketul C/O SAMSUNG ELECTRONICS CO., LTD., Gyeonggi-do (KR)
(74) Representative: Grünecker, Kinkeldey, Stockmair & Schwanhäusser Anwaltssozietät

(57) **Abstract**

A mobile device (100A,100B,100C,100D) is provided that is operable for communicating in a mobile ad hoc network (10). The mobile device includes a transceiver operable to promote wireless communication. The mobile device also includes a display, an input, and a processor that is operable to promote the transceiver communicating with other devices in the mobile ad hoc network. The processor is operable to receive instructions that when executed by the processor promote providing to the display of the mobile device a lobby graphical user interface (GUI) related to one or more data exchange sessions for exchanging data between devices in the mobile ad hoc network. The processor is also operable to receive from a user of the mobile device via the input a characteristic pertaining to a data exchange session. The processor further promoting establishing the data exchange session with other devices in the mobile ad hoc network based on the characteristic.

## Description

The present invention relates to a mobile ad hoc network, and more particularly to a device and method for exchanging data in a mobile ad hoc network, and a computer-readable medium.

Traditional local area networks (LANs) typically have a central server that acts as a controller and coordinator for data traffic among the clients in the network. Communication between clients in a traditional LAN typically does not occur directly from one client to another. Instead, data might be sent from a client to the server and then from the server to another client. The server might also handle the logging in of clients, the synchronization of the activities of the clients, and other centralized control functions.

A mobile ad hoc network (MANET) can be defined as a group of wireless computing devices capable of communicating directly with one another without a server acting as a central coordinator or scheduler for the data traffic between the devices. A MANET typically comprises a plurality of wireless devices such as smart phones, laptop computers, handheld computers, personal digital assistants, and similar devices. The wireless devices in a MANET might be capable of communicating with one another via well-known wireless data transfer protocols, such as TCP/IP (Transmission Control Protocol/Internet Protocol).

Accordingly, the present invention has been made to solve the above-mentioned problems occurring in the prior art. It is the object of the present invention to provide a mobile device operable for communicating in a mobile ad hoc network.

This object is solved by the subject matter of the independent claims.

Preferred embodiments are defined in the dependent claims.

According to one aspect of the present invention, there is provided a method for establishing a data exchange session between devices in a mobile ad hoc network.

According to a further aspect of the present invention, there is provided a computer-readable medium including instructions containing the improved method.

In one embodiment, a mobile device is provided that is operable for communicating in a mobile ad hoc network. The mobile device includes a transceiver operable to promote wireless communication. The mobile device also includes a display, an input, and a processor that is operable to promote the transceiver communicating with other devices in the mobile ad hoc network. The processor is operable to receive instructions that when executed by the processor promote providing to the display of the mobile device a lobby graphical user interface (GUI) related to one or more data exchange sessions for exchanging data between devices in the mobile ad hoc network. The processor is also operable to receive from a user of the mobile device via the input a characteristic pertaining to a data exchange session. The processor further promoting establishing the data exchange session with other devices in the mobile ad hoc network based on the characteristic.

In another embodiment, a method is provided for establishing a data exchange session between devices in a mobile ad hoc network. The method includes forming a mobile ad hoc network comprising a plurality of devices, and a user of one of the plurality of the devices specifying a characteristic pertaining to the data exchange session. The method includes communicating the characteristic of the data exchange session to the plurality of devices in the mobile ad hoc network, and a user of another of the plurality of devices in the mobile ad hoc network electing to join the data exchange session based on the characteristic. The method also includes at least the specifying user and electing user exchanging data between devices according to the data exchange sessions within the mobile ad hoc network.

In another embodiment, a computer-readable medium is provided that includes instructions that when executed by a processor of a device in a mobile ad hoc network promote providing a method that includes enabling a user of the device to establish characteristics for a session, and providing the session accessible to other devices in the mobile ad hoc network to join according to the characteristics when said other devices join the session according to the characteristics; and

The method also includes enabling data exchange between the device and other devices in the mobile ad hoc network via the session.

These and other features and advantages will be more clearly understood from the following detailed description taken in conjunction with the accompanying drawings and claims.

The above and other aspects, features and advantages of the present invention will be more apparent from the following detailed description taken in conjunction with the accompanying drawings, in which:

For a more complete understanding of the disclosure and the advantages thereof, reference is now made to the following brief description, taken in connection with the accompanying drawings and detailed description, wherein like reference numerals represent like parts.
Figure 1 is a diagram of a mobile ad hoc network according to an embodiment of the disclosure.
Figure 2 is a diagram of a component for exchanging data in a mobile ad hoc network according to an embodiment of the disclosure.
Figure 3 is a diagram of a method for establishing a data exchange session according to an embodiment of the disclosure.
Figure 4 is a diagram of a wireless communications system including a handset operable for some of the various embodiments of the disclosure.
Figure 5 is a block diagram of a handset operable for some of the various embodiments of the disclosure.
Figure 6 is a diagram of a software environment that may be implemented on a handset operable for some of the various embodiments of the disclosure.
Figure 7 illustrates an exemplary general-purpose computer system suitable for implementing the several embodiments of the disclosure.

Hereinafter, exemplary embodiments of the present invention will be described with reference to the accompanying drawings. In the following description of the present invention, a detailed description of known functions and configurations incorporated herein will be omitted when it may make the subject matter of the present invention rather unclear.

It should be understood at the outset that although an exemplary implementation of one embodiment of the disclosure is illustrated below, the system may be implemented using any number of techniques, whether currently known or in existence. The disclosure should in no way be limited to the exemplary implementations, drawings, and techniques illustrated below, including the exemplary design and implementation illustrated and described herein.

Embodiments of the disclosure provide an application for a mobile ad hoc network (MANET) that allows a group of users in a relatively small region to share data directly with one another without the data passing through a central server. A wireless, ad hoc, data sharing session might be set up for users in a restaurant or bar, in a retail store, at a concert or sports venue, in a park, in an airport, or in some other public or other defined gathering place. The data sharing session might include activities such as text chatting, audio/video conferencing, photo sharing, audio sharing, video sharing, desktop/screen sharing, application sharing, multiplayer gaming, or other activities. Any such online environment of interactive communication will be referred to herein as a session. A user might use a handset or similar device to view information about the sessions currently active in the vicinity and might choose to join a session that appears to be of interest. If no sessions of interest are active in the vicinity, a user might choose to create a new session and might broadcast information about the new session so that other users in the vicinity can be aware of the new session.

As an example, a user entering a coffee shop might wish to engage in a chat session with other patrons of the coffee shop regarding, for example, an upcoming sporting event. The user might use a wireless device to access the application that allows such a chat session to occur and the application might allow the user to view information about any sessions currently active in the vicinity. If the user finds a session underway pertaining to the sporting event, the user might request to join the session. Upon joining the session, the user might exchange text messages about the event with other patrons of the coffee shop or other users in the vicinity. Other data, such as voice messages, photos, videos, web links or audio files, might also be exchanged.

If the user does not find an active session about the sporting event, the user might create a session about that topic. The user might give the session an appropriate name or otherwise categorize the session so that other users in the vicinity browsing for active sessions can see that a session about the sporting event is underway. The user might also specify other parameters about the session. For example, the user might designate the session as public, meaning that anyone in the vicinity can join the session. Alternatively, the user might designate the session as private and might specify the characteristics of the users who will be allowed to join the session. For instance, the user might specify that only users in a particular age group or users who are followers of a particular team may join the session. A user who creates a session can be referred to as the session owner.

The users engaged in a session form a MANET that can have several different connection modes. In one case, at least some of the users' wireless devices connect directly to one another without passing through an access point or any other intermediary element. In another case, at least some of the users' devices connect to one another through an access point that may or may not also connect to the Internet. In another case, at least some of the users' devices connect to the Internet via a wireless or wireline method and connect to the MANET via the Internet. Such devices may or may not also connect to one another wirelessly.

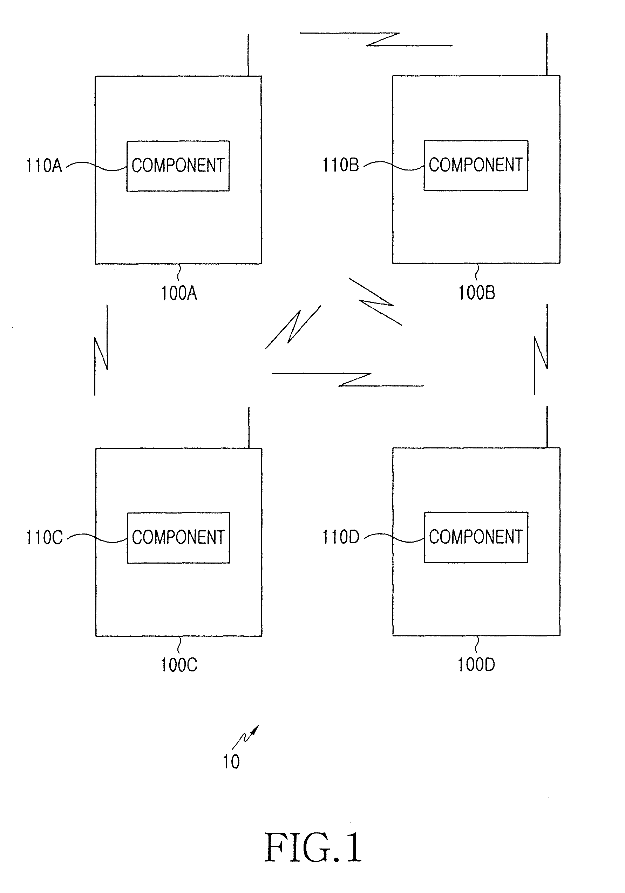

Figure 1 illustrates an embodiment of a portion of a MANET 10 that might support such sessions. The MANET 10 includes handheld wireless mobile devices 100a ∼ 100d such as cellular phones, smart phones, personal digital assistants (PDAs), handheld computers, or other mobile devices. Additionally or alternatively, the devices 100a ~ 100d may comprise laptop computers, desktop computers, or multimedia devices. The devices 100a - 100d may include antennas and radio frequency transceivers (not shown) to promote radio communications and may communicate directly with one another via wireless connections such as via WiFi, Bluetooth, Zigbee, ultra wideband (UWB), or other short-range wireless communication protocols. Alternatively, the devices 100a ∼ 100d may communicate with one another indirectly through a wireless network access point via wireless connections such as these. Alternatively, the devices 100a ∼ 100d may connect to the Internet using code division multiple access (CDMA), global system for mobile communication (GSM), universal mobile telecommunications service (UMTS), or a similar long-range wireless communication protocol. In addition, one or more wired connections may be present between the devices 100a ∼ 100d and/or between one or more of the devices 100a ~ 100d and the Internet.

The size of the geographic area over which the MANET 10 extends might depend on the types of connections between the devices 100a ~ 100d. When the connections are strictly of a short-range type, such as WiFi, Bluetooth, Zigbee, or UWB, the extent of the MANET 10 might be small. When one or more devices 100a ~ 100d connect to the MANET 10 via a longer range connection, such as CDMA, GSM, or UMTS, the MANET 10 can extend over a larger area.

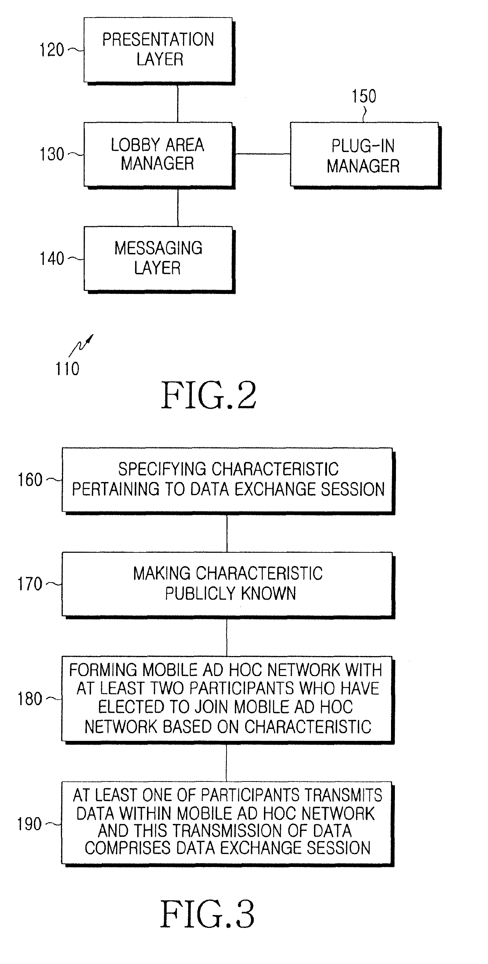

In an embodiment, each of devices 100a ∼ 100d includes a component 110a or 110d that is capable of providing the functionality that allows users to create and join sessions with other users in the vicinity. While depicted as a single unit, the components 110a ∼ 110d might include a plurality of elements. Figure 2 illustrates an embodiment of the component 110a ∼ 110d in the devices 100a ∼ 100d. In this embodiment, the component 110 includes a presentation layer 120, a lobby area manager 130, a messaging layer 140, and a plug-in manager 150.

In an embodiment, the presentation layer 120 includes a graphical user interface (GUI) through which a user can navigate to create and join sessions and to send and receive data during a session. The GUI might display information about the sessions that are currently active in the vicinity so that users can browse through the information to find a session that might be of interest. When a user has entered a session, the GUI might display information about the other participants in the session. In the case of a device 100a or 100d that can access the Internet, the GUI might also be able to display web pages and/or email messages.

In an embodiment, the lobby area manager 130 acts as a controller and coordinator for the session-related functions. For example, the lobby area manager 130 might receive input from a session owner regarding which potential participants will be allowed into a session. Parameters that the session owner might specify as filters for the potential participants include age, gender, occupation, political preferences, sports team affiliations, or other characteristics of the session owner's choosing. The session owner might use the GUI in the presentation layer 120 to enter the filter parameters, which would then be stored in the lobby area manager 130. When a potential participant attempts to enter the session created by the session owner, the lobby area manager 130 can compare the personal parameters provided by the potential participant to the filter parameters specified by the session owner. If a match is found between the two sets of parameters, the lobby area manager 130 can allow the potential participant into the session.

In an embodiment, a potential participant might specify a set of personal traits or characteristics in a profile that might be stored on the device 100a or 100d used by the potential participant. When the potential participant attempts to enter a session, the device 100a or 100d used by the potential participant might automatically transmit one or more of the potential participant's traits or the potential participant's entire profile so that the session owner's device 100a or 100d can receive the traits or the profile and the lobby area manager 130 on the session owner's device 100a or 100d can compare the traits or the profile to the session owner's filters for the session.

In an embodiment, a session owner might specify that a session is to be based strictly on traits or profiles rather than on a specific topic. That is, the session owner might specify that a session is open for discussion on any topic but is open only to participants who have certain traits or who meet certain profile parameters. In another embodiment, a session owner might specify that a session is to be based on a particular topic and is public and therefore open to everyone regardless of their traits or profile. In yet another embodiment, a session owner might specify that a session is to be based on both a topic and a profile or one or more traits. That is, the session owner might specify the topic for a session and might specify the traits or profile parameters that the participants must possess to enter the session on that topic.

A session for which the session owner has specified the traits of the participants who will be allowed into the session can be referred to as a private session. For such a session, the lobby area manager 130 might automatically compare the session parameters specified by the session owner to the traits provided by the potential participants and might automatically allow or disallow potential participants based on the comparison. Alternatively, the session owner might manually review the traits of all potential participants who have requested to enter the session and might decide on a case-by-case basis which potential participants will be allowed into the session.

Another session parameter that the lobby area manager 130 might manage is the number of participants allowed in a session. A session owner might specify a maximum number of participants for a session and, when the maximum is reached, the lobby area manager 130 might allow no further participants to enter the session. Alternatively, the maximum number of participants that can enter a session might be determined by the capabilities of the MANET 10 that is hosting the session.

The lobby area manager 130 might also manage the titles or categories for the sessions. When a session owner creates a session, the session owner might give the session a title or place the session in a category so that other users can recognize the topic of the session. The session owner might select from a list of pre-existing titles and/or categories or might create a new title or category. The title or category selected by the session owner can be stored in the lobby area manager 130, which can then make the title or category available to users who are browsing for a topic of interest.

When a participant is allowed into a session, the lobby area manager 130 can perform the actions necessary to connect the participant to the session owner. For example, the lobby area manager 130 can provide information about the Internet Protocol (IP) addresses of the session owner and the participants. The lobby area manager 130 can also specify whether communication between the session owner and the participants will be a unicast, a multicast, or a broadcast and whether the connections between the session owner and the participants will be will be group, one-to-one, or one-to-many.

In an embodiment, the messaging layer 140 controls the transmission of data during a session and during the setup of a session. During session setup, the messaging layer 140 might transmit messages from potential participants searching for sessions of interest in the vicinity or might transmit messages from session owners containing information about the sessions they have created. When a potential participant finds and attempts to enter a session of interest, the messaging layer 140 can transmit the messages necessary for the potential participant to enter the session. After a session has been set up, the messaging layer 140 can handle the transmission of the data packets that comprise the session. Data transmission might follow the hypertext transfer protocol (HTTP), the session initiation protocol (SIP), the user datagram protocol (UDP), or any other well-known data transmission protocol.

In an embodiment, the plug-in manager 150 allows the lobby area manager 130 to make use of external applications. For example, some web sites, such as dating services or social interaction sites, allow users to create profiles of their personal characteristics and the web sites might make these profiles available as "plug-ins" for other applications. The plug-in manager 150 can receive such plug-ins and make a profile created under another application available for use by the lobby area manager 130. Other types of plug-ins created under other external applications can also be received by the plug-in manager 150 and made available to the lobby area manager 130.

As mentioned previously, the MANET 10 might include devices 100a ∼ 100d of different types and capabilities. For example, mobile users may communicate wirelessly within the MANET 10 using cellular phones that support audio and text only or using "smart" phones that support still image and video capabilities. Other users may connect to the MANET 10 using a laptop computer, a desktop computer, or some other apparatus that has an Internet connection, but that may not have a telecommunications connection such as CDMA or GSM.

As an example of such an arrangement, a coffee shop or similar establishment might have available for use by its patrons one or more computers with wired or wireless Internet connections. Such a computer might also include the component 110 that allows the computer to connect to the MANET 10. When a user of a mobile handset or similar device 100a or 100d creates a session in the vicinity of the coffee shop, a patron using a computer equipped with the component 110 could connect to the MANET 10 via the Internet or wirelessly directly or indirectly connect to another device 100a or 100d that may be nearby and enter the session.

In an embodiment, such a computer might be configured to transmit information about one or more topics and/or about one or more profiles. A user in the vicinity of such a computer might select one or more of these topics and/or profiles as being of interest. If two or more users select the same topic and/or profile, the computer might create a session related to that topic and/or profile. This can eliminate the need for the users to specify the parameters for a session.

Figure 3 illustrates a method 155 for establishing a data exchange session. In box 160, a characteristic pertaining to the data exchange session is specified. In box 170, the characteristic is made publicly known. In box 180, a mobile ad hoc network is formed with at least two participants who have elected to join the mobile ad hoc network based on the characteristic. In box 190, at least one of the participants transmits data within the mobile ad hoc network and this transmission of data comprises the data exchange session.

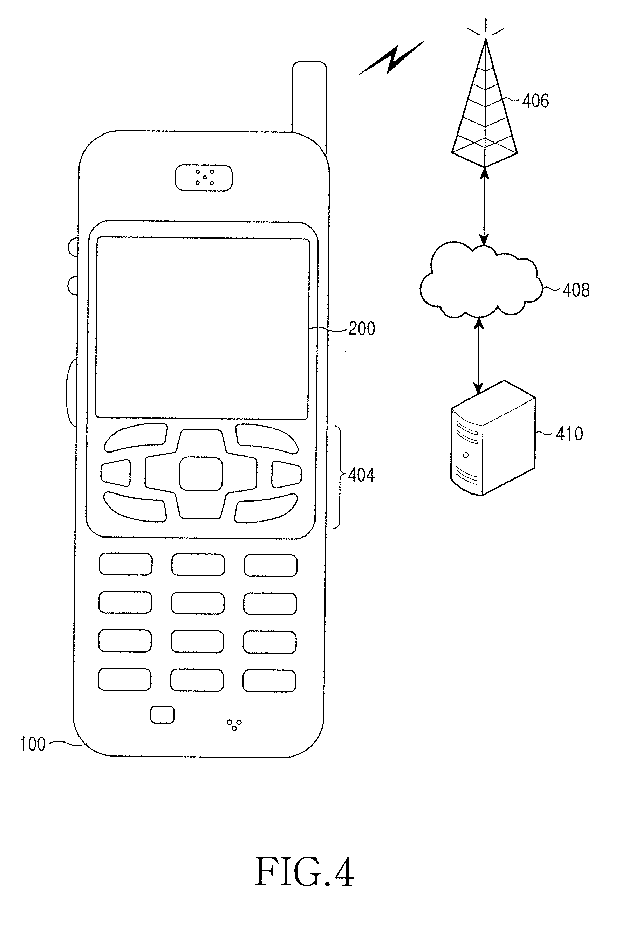

Figure 4 shows a wireless communications system including the device 100. The device 100 is operable for implementing aspects of the disclosure, but the disclosure should not be limited to these implementations. Though illustrated as a mobile phone in Figure 4, the device 100 may take various forms including a wireless handset, a pager, a personal digital assistant (PDA), a portable computer, a tablet computer, or a laptop computer. Many suitable devices 100 combine some or all of these functions. In some embodiments, the device 100 is not a general purpose computing apparatus like a portable, laptop or tablet computer, but rather is a special-purpose communications apparatus such as a mobile phone, wireless handset, pager, or PDA.

The device 100 includes a display 200 and a touch-sensitive surface or keys 404 for input by a user. The device 100 may present options for the user to select, controls for the user to actuate, and/or cursors or other indicators for the user to direct. The device 100 may further accept data entry from the user, including numbers to dial or various parameter values for configuring the operation of the device 100. The device 100 may further execute one or more software or firmware applications in response to user commands. These applications may configure the device 100 to perform various customized functions in response to user interaction.

Among the various applications executable by the device 100 are a web browser, which enables the display 200 to show a web page. The web page is obtained via wireless communications with a cell tower 406, a wireless network access node, or any other wireless communication network or system. The cell tower 406 (or wireless network access node) is coupled to a wired network 408, such as the Internet. Via the wireless link and the wired network, the device 100 has access to information on various servers, such as a server 410. The server 410 may provide content that may be shown on the display 200.

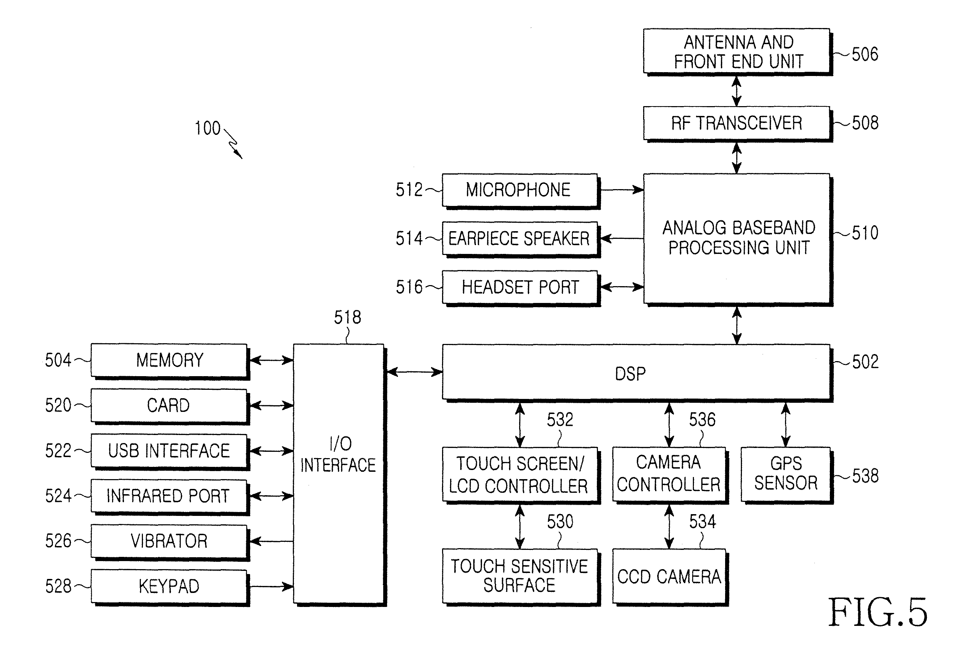

Figure 5 shows a block diagram of the device 100. The device 100 includes a digital signal processor (DSP) 502 and a memory 504. As shown, the device 100 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, an infrared port 524, a vibrator 526, a keypad 528, a touch screen liquid crystal display (LCD) with a touch sensitive surface 530, a touch screen/LCD controller 532, a charge-coupled device (CCD) camera 534, a camera controller 536, and a global positioning system (GPS) sensor 538.

The DSP 502 or some other form of controller or central processing unit operates to control the various components of the device 100 in accordance with embedded software or firmware stored in memory 504. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the device 100 to send and receive information from a cellular network or some other available wireless communications network. The RF transceiver 508 provides frequency shifting, converting received RF signals to baseband and converting baseband transmit signals to RF. The analog baseband processing unit 510 may provide channel equalization and signal demodulation to extract information from received signals, may modulate information to create transmit signals, and may provide analog filtering for audio signals. To that end, the analog baseband processing unit 510 may have ports for connecting to the built-in microphone 512 and the earpiece speaker 514 that enable the device 100 to be used as a cell phone. The analog baseband processing unit 510 may further include a port for connecting to a headset or other hands-free microphone and speaker configuration.

The DSP 502 may send and receive digital communications with a wireless network via the analog baseband processing unit 510. In some embodiments, these digital communications may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the infrared port 524. The USB interface 522 may enable the device 100 to function as a peripheral device to exchange information with a personal computer or other computer system. The infrared port 524 and other optional ports such as a Bluetooth interface or an IEEE 802.11 compliant wireless interface may enable the device 100 to communicate wirelessly with other nearby handsets and/or wireless base stations.

The input/output interface 518 may further connect the DSP 502 to the vibrator 526 that, when triggered, causes the device 100 to vibrate. The vibrator 526 may serve as a mechanism for silently alerting the user to any of various events such as an incoming call, a new text message, or an appointment reminder.

The keypad 528 couples to the DSP 502 via the interface 518 to provide one mechanism for the user to make selections, enter information, and otherwise provide input to the device 100. Another input mechanism may be the touch screen LCD 530, which may also display text and/or graphics to the user. The touch screen LCD controller 532 couples the DSP 502 to the touch screen LCD 530.

The CCD camera 534 enables the device 100 to take digital pictures. The DSP 502 communicates with the CCD camera 534 via the camera controller 536. The GPS sensor 538 is coupled to the DSP 502 to decode global positioning system signals, thereby enabling the device 100 to determine its position. Various other peripherals may also be included to provide additional functions, e.g., radio and television reception.

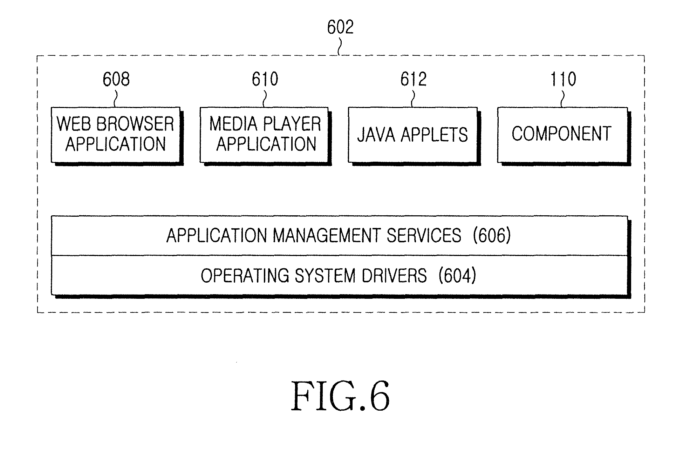

Figure 6 illustrates a software environment 602 that may be implemented by the DSP 502. The DSP 502 executes operating system drivers 604 that provide a platform from which the rest of the software operates. The operating system drivers 604 provide drivers for the handset hardware with standardized interfaces that are accessible to application software. The operating system drivers 604 include application management services ("AMS") 606 that transfer control between applications running on the device 100. Also shown in Figure 6 are a web browser application 608, a media player application 610, and Java applets 612. The web browser application 608 configures the device 100 to operate as a web browser, allowing a user to enter information into forms and select links to retrieve and view web pages. The media player application 610 configures the device 100 to retrieve and play audio or audiovisual media. The Java applets 612 configure the device 100 to provide games, utilities, and other functionality. The component 110 that provides the functionality for creating and joining sessions might also be part of the software environment 602.

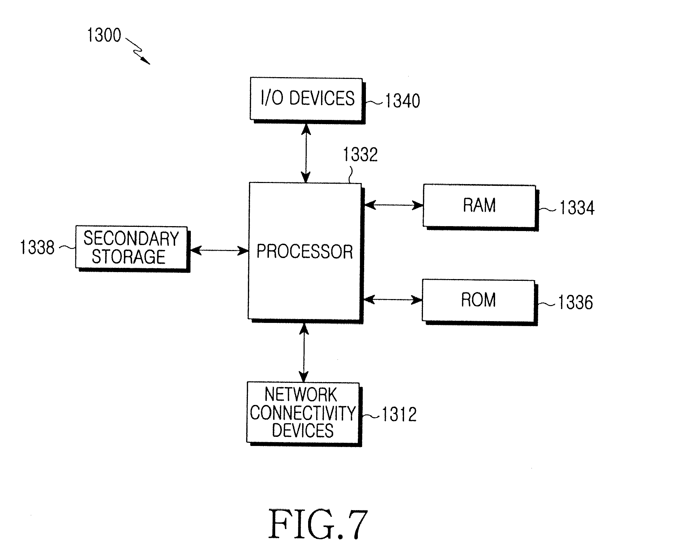

The devices 100 and the server 410 described above may be implemented on any general-purpose computer with sufficient processing power, memory resources, and network throughput capability to handle the necessary workload placed upon it. Figure 7 illustrates a typical, general-purpose computer system 1300 suitable for implementing one or more embodiments disclosed herein. The computer system 1300 includes a processor 1332 (which may be referred to as a central processor unit or CPU) that is in communication with memory devices including secondary storage 1338, read only memory (ROM) 1336, random access memory (RAM) 1334, input/output (I/O) devices 1340, and network connectivity devices 1312. The processor 1332 may be implemented as one or more CPU chips.

The secondary storage 1338 is typically comprised of one or more disk drives or tape drives and is used for non-volatile storage of data and as an overflow data storage device if the RAM 1334 is not large enough to hold all working data. Secondary storage 1338 may be used to store programs which are loaded into the RAM 1334 when such programs are selected for execution. The ROM 1336 is used to store instructions and perhaps data which are read during program execution. The ROM 1336 is a non-volatile memory device which typically has a small memory capacity relative to the larger memory capacity of the secondary storage 1338. The RAM 1334 is used to store volatile data and perhaps to store instructions. Access to both ROM 1336 and RAM 1334 is typically faster than to secondary storage 1338.

I/O devices 1340 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 1312 may take the form of modems, modem banks, ethernet cards, universal serial bus (USB) interface cards, serial interfaces, token ring cards, fiber distributed data interface (FDDI) cards, wireless local area network (WLAN) cards, ultra-wideband (UWB) cards, radio transceiver cards such as code division multiple access (CDMA) and/or global system for mobile communications (GSM) radio transceiver cards, and other well-known network devices. These network connectivity devices 1312 may enable the processor 1332 to communicate with the Internet or one or more intranets. With such a network connection, it is contemplated that the processor 1332 might receive information from the network, or might output information to the network in the course of performing the above-described method steps. Such information, which is often represented as a sequence of instructions to be executed using the processor 1332, may be received from and outputted to the network, for example, in the form of a computer data signal embodied in a carrier wave.

Such information, which may include data or instructions to be executed using the processor 1332 for example, may be received from and outputted to the network, for example, in the form of a computer data baseband signal or signal embodied in a carrier wave. The baseband signal or signal embodied in the carrier wave generated by the network connectivity devices 1312 may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 1332 executes instructions, codes, computer programs, and scripts which it accesses from hard disk, floppy disk, optical disk (these various disk-based systems may all be considered secondary storage 1338), ROM 1336, RAM 1334, or the network connectivity devices 1312.

While several embodiments have been provided in the disclosure, it should be understood that the disclosed systems and methods may be embodied in many other specific forms without departing from the scope of the disclosure. The examples are to be considered as illustrative and not restrictive, and the intention is not to be limited to the details given herein, but may be modified within the scope of the appended claims. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the disclosure. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the scope disclosed herein.

## Claims

1. A computer-readable medium including instructions that when executed by a processor of a device in a mobile ad hoc network promote a method comprising:
enabling a user of the device to establish characteristics for a session;
providing the session accessible to other devices in the mobile ad hoc network to join according to the characteristics when said other devices join the session according to the characteristics; and
enabling data exchange between the device and said other devices in the mobile ad hoc network via the session.

2. The computer-readable medium of claim 1, wherein the characteristics include establishing traits of participants of the session.

3. The computer-readable medium of claim 1, wherein the characteristics include a subject of data exchanged via the session.

4. The computer-readable medium of claim 1, wherein data exchange via the session includes at least one of chatting, file sharing, discussion group communication, multiplayer gaming.

5. The computer-readable medium of one of claims 1 to 4, wherein the device communicates in the ad hoc network one another according to at least one of:
WiFi;
Bluetooth;
Zigbee;
ultra wideband;
code division multiple access;
global system for mobile communication; and
universal mobile telecommunications service.

6. A method for establishing a data exchange session between devices in a mobile ad hoc network, comprising:
forming a mobile ad hoc network comprising a plurality of devices;
a user of one of the plurality of the devices specifying a characteristic pertaining to the data exchange session;
communicating the characteristic of the data exchange session to the plurality of devices in the mobile ad hoc network;
a user of another of the plurality of devices in the mobile ad hoc network electing to join the data exchange session based on the characteristic;
at least the specifying user and electing user exchanging data between devices according to the data exchange sessions within the mobile ad hoc network.

7. The method of claim 6, wherein the characteristic is at least one of:
a topic for the data exchange session; and
a trait of participants for the data exchange session.

8. The method of claim 6 or 7, wherein when the characteristic is a trait defining participants for the data exchange session, the method further comprises prohibiting in the data exchange session participants that do not possess the trait.

9. The method of claim 8, further comprising:
determining, by the user that specified the characteristics, the traits of the participant; and
limiting, by the user that specified the characteristics, participation in the data exchange session based on whether the participant possesses the trait.

10. The method of one of claims 6 to 9, further comprising displaying information pertaining to the data exchange session on a graphical user interface, GUI, of one of the plurality of devices connected to the mobile ad hoc network.

11. The method of one of claims 6 to 10, further comprising:
specifying by the user a total number of participants allowed to participate in the data exchange session; and
restricting additional participants when the total number of participants participating in the data exchange session equals the total number of participants specified.

12. A mobile device operable for communicating in a mobile ad hoc network, the mobile device comprising:
a transceiver operable to promote wireless communication;
a display;
an input; and
a processor operable to promote the transceiver communicating with other devices in the mobile ad hoc network, the processor operable to receive instructions that when executed by the processor promote providing to the display of the mobile device a lobby graphical user interface, GUI, related to one or more data exchange sessions for exchanging data between devices in the mobile ad hoc network, the processor further operable to receive from a user of the mobile device via the input a characteristic pertaining to a data exchange session and to promote establishing the data exchange session with other devices in the mobile ad hoc network based on the characteristic.

13. The mobile device of claim 12, wherein the mobile device is selected from a group of mobile devices consisting of a laptop computer, a tablet computer, a personal digital assistant, and a wireless handset.

14. The mobile device of claim 12 or 13, wherein the data exchange session is one of a chat session, a discussion group, file sharing, multiplayer gaming.

15. The mobile device of one of claims 12 to 14, wherein the mobile device connects to at least one other device in the mobile ad hoc network via at least one of:
a wireless connection having no intermediary device between the mobile device and the at least one other device in the mobile ad hoc network;
a wireless connection having an intermediary device between the mobile device and the at least one other device mobile ad hoc network; and
a connection via the Internet.

16. The mobile device of one of claims 12 to 15, further comprising a plug-in manager operable to receive external data from a source external to the component and make the external data available to a lobby area manager.

17. The mobile device of one of claims 12 to 16, wherein the characteristic is at least one of:
a topic for the data exchange session; and
a trait of participants for the data exchange session.

18. The mobile device of one of claims 12 to 17, wherein when the characteristic is a trait defining participants for the data exchange session, the method further comprises prohibiting in the data exchange session participants that do not possess the trait.
